# EUROPEAN PATENT APPLICATION

(11) **EP 4 566 880 A1**
(43) Date of publication of application: **11.06.2025**
(21) Application number: 24205744.6
(22) Date of filing: 10.10.2024
(51) Int. Cl.: B60N 2/75

(54) **APPARATUS WITH TILTING ELEMENT ADJUSTABLE IN INCLINATION, IN PARTICULAR AN ARMREST OF A VEHICLE**

(30) Priority: 06.12.2023 IT 202300026109
(71) Applicant: Clerprem S.p.A., 36010 Carre (VI) (IT)
(72) Inventor: APPOLONI, Ivan, I-36010 Carrè, VICENZA (IT); SARTORI, Mirco, I-36010 Carrè, VICENZA (IT); ALLEGRO, Davide, I-36010 Carrè, VICENZA (IT)
(74) Representative: Zanettin, Gianluigi

(57) **Abstract**

The invention relates to an apparatus with tilting element adjustable in inclination comprising: - a support structure (2); - a tilting element (3), pivoted to the support structure around a first rotation axis (X1); - at least a first abutment (4'); - at least one stop body (10) rotationally connected to the tilting body (3) and to the support structure (2) around the first axis (X1); - an automatic constraining mechanism (100); - a control device (40), which is kinematically connected to said automatic constraining mechanism (100) and is movable between a locking position and an unlocking position. The automatic constraining mechanism (100) comprises: - a first toothed portion (101), which is obtained on said stop body (10); - a first toothed wheel (111), which is meshed on said toothed portion (101) of the stop body (10) and is rotationally connected to the tilting element (3) around a second rotation axis (X2) parallel to the first rotation axis (X1); - a first torsion spring (121), which is inserted in said automatic constraining mechanism (100) to provide a force (Fm) suitable to indirectly prevent the rotation of said first toothed wheel (111). The torsion spring (121) is wound around a rotation pin (131) rotationally connected to the tilting element (3) around a third rotation axis (X3), which is parallel to the first rotation axis (X1) and to the second rotation axis (X2) and is in an intermediate position between said two axes (X1, X2). Said automatic constraining mechanism (100) consists of a gear which is suitable for kinematically connecting the rotation of the first toothed wheel (111) to the rotation pin (131) indirectly by means of an intermediate transmission stage.

## Description

### Field of application

The present invention relates to an apparatus with tilting element adjustable in inclination.

In particular, the apparatus with a tilting element can be an armrest of a vehicle, e.g., of a motor vehicle. The apparatus according to the invention can also be a seat, a backrest, a footrest, a table with an adjustable tabletop or other.

### Background art

Apparatuses with a tilting element lockable in various inclinations, where the inclination can be adjusted by means of an adjustment system actuatable by the user, are known. In particular, armrests for vehicle are known to be equipped with a system to adjust the inclination of the movable part of the armrest.

Very widespread devices are known which use a ratchet or freewheel bearing adjustment system. However, despite fulfilling their function, such systems do not allow the tilting element to be automatically returned to a determined chosen position. Indeed, whenever the tilting element is moved from a chosen position, the entire adjustment must be repeated to return thereto. This is not immediate and, in any case, does not ensure that the desired result will be obtained immediately and easily.

Therefore, the need to have apparatuses with tilting element provided with a system for automatically restoring a chosen adjustment position of the tilting element itself is felt, in particular in the automotive field with specific reference to vehicle armrests.

Currently, such a need is mainly met with the help of electromechanical systems, which involving, for example, electric motors and electronic control systems. However, despite fulfilling their function, these systems have high implementation costs.

Solutions of the mechanical type are additionally known. The same applicant has developed an adjustable tilting armrest, provided with a kinematic system designed to automatically restore a chosen adjustment position of the armrest itself. Such a solution is described in European patent EP 3608169 B1.

More in detail, this system allows the adjustment in inclination of the armrest with a stepless movement, i.e., in infinite positions within a given adjustment range. Such a system is actuatable by the user's action on specific control members, usually represented by levers or buttons.

The adjustment system comprises a toothed wheel mechanism designed to adjust the angular position around the rotation axis of the armrest of a stroke-end element with respect to the tilting portion of the armrest. The mechanism comprises a locking device deactivatable by the user by means of a control device. Such a locking device consists of a coil spring wound around a rotating pin. The kinematic connection between the coil spring and the stroke-end element is ensured by a toothed wheel fitted onto the rotating pin and engaged on a circular toothed sector obtained on the stroke-end element and centred on the rotation axis of the armrest.

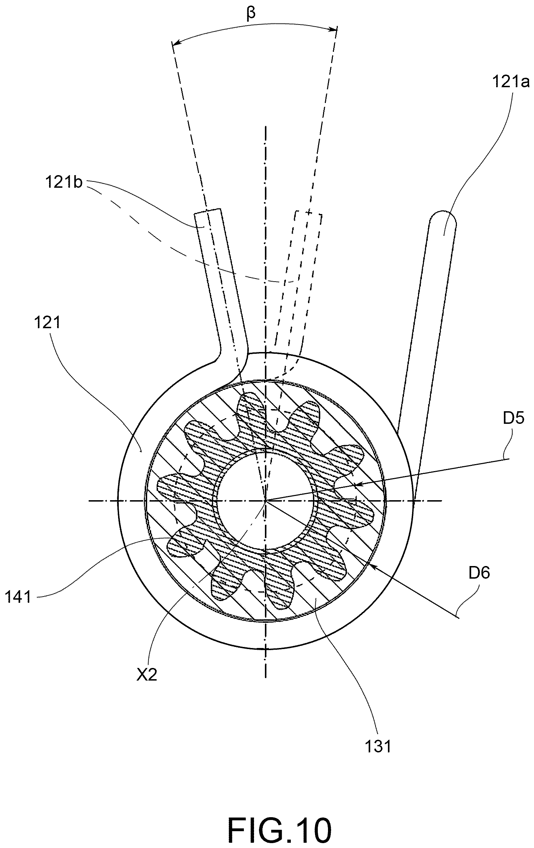

The function of the spring is to lock, when wound, the rotation axis, which allows the position of the stroke-end element to vary. Operatively, actuating the aforesaid control causes the spring to expand (see figure 10), thus releasing the rotation of the toothed wheel mechanism and thereby allowing the user to adjust the inclination of the armrest.

In the kinematic chain of the toothed wheel mechanism, the member which causes the locking of the mechanism is precisely the aforementioned coil spring. The locking of the mechanism occurs by virtue of the friction generated by said spring around the winding axis. As a result, net of the structural limitations of the armrest system, the greater the braking force provided by the spring, the greater the load supported by the armrest itself.

In the aforesaid mechanism, the kinematic chain which governs the transmission of a hypothetical load bearing on the end of the armrest to the coil spring has two transmission stages. A first transmission stage is defined by the ratio L1/L2, where L1 is the distance between the free end of the armrest and the rotation axis of the armrest and L2 is the radius of the primitive circumference of the toothed sector of the stroke-end element. A second transmission stage is defined by the ratio D5/D6, where D5 is the diameter of the primitive circumference of the toothed wheel and D6 is the winding diameter of the coil spring.

The technical solution described above has two limitations.

A first limitation is related to the fact that, in order to minimize the L1/L2 ratio, the toothed sector of the stroke-end element is spaced as far as possible from the rotation axis of the armrest. As a result, the rotation pin with relative spring and toothed wheel is located far below the rotation axis of the armrest, thus encroaching on a zone of the armrest which in the automotive field is intended for the passage of electrical cables and air ducts. For such reasons, the technical solution described above is not suited for installation in tight, confined spaces.

A second limitation is that the use of particularly strong coil springs will be necessary to support loads of the order of 800 N usually required in the automotive field. The expansion of the coil spring by means of the control device thus requires the application of an appropriate force, which, however, can make it burdensome, and certainly not comfortable, to operate the control device itself.

Therefore, there is felt a first need to have an apparatus with a tilting element adjustable in inclination (in particular, an armrest) which, while still allowing stepless adjustment of the tilting element without using electromechanical devices, has an adjustment mechanism to be installed in tight and cramped spaces.

Furthermore, the need is felt for an apparatus with a tilting element adjustable in inclination (in particular, an armrest) which, while still allowing stepless adjustment of the tilting element without using electromechanical devices, has a control device mechanically operable by the user in an easy manner.

### Overview of the invention

Therefore, it is the main object of the present invention to eliminate all or at least some of the drawbacks of the aforesaid prior art by providing an apparatus with a tilting element adjustable in inclination which allows continuous (stepless) adjustment of the tilting element without using electromechanical devices while having an adjustment mechanism to be installed in tight and narrow spaces.

It is a further object of the present invention to provide an apparatus with a tilting element adjustable in inclination which allows continuous (stepless) adjustment of the tilting element without using electromechanical devices while having a control device mechanically operable by the user with the application of small loads so as to allow ergonomic use.

It is a further object of the present invention to provide an apparatus with a tilting element adjustable in inclination which has a very compact adjustment mechanism.

It is a further object of the present invention to provide an apparatus with a tilting element adjustable in inclination which assists the user in the lifting movement of the tilting element.

It is a further object of the present invention to provide an apparatus with a tilting element adjustable in inclination which is mechanically simple and at the same time immediately and easily operable.

It is a further object of the present invention to provide an apparatus with a tilting element adjustable in inclination which is easy and inexpensive to manufacture.

It is a further object of the present invention to provide an apparatus with a tilting element adjustment in inclination which comprises a locking system easily manageable by the user in case of a collision.

### Brief description of the drawings

The technical features of the invention according to the aforesaid objects can be clearly found in the contents of the claims hereinbelow and the advantages thereof will become more apparent from the following detailed description, given with reference to the accompanying drawings which show one or more embodiments thereof merely given by way of non-limiting example, in which:
- figure 1 shows a perspective view of an apparatus according to a preferred first embodiment of the present invention, illustrated with the tilting element in the first stroke-end position at a specific angle;
- figure 2 shows an exploded view of the apparatus in Figure 1 free from the covering element of the titling element;
- figure 3 shows an orthogonal plan view from the top of the apparatus in figure 1;
- figure 4a shows a section view of the apparatus in figure 3 taken along section plane IV-IV here shown, with a control device in a locking position and a tilting element in a first stroke-end position;
- figure 4b shows the apparatus in figure 4a with the control device in the unlocking position and the tilting element still in the first stroke-end position;
- figure 4c shows the apparatus in figure 4b with the control device returned to the locking position and the tilting element in a second stroke-end position corresponding to a maximum inclination position of the tilting element;
- figures 5a, b and c are three section views of the apparatus in figure 3 taken along the section plane V-V here shown, with the control device and the tilting element in the positions in figures 4a, b and c, respectively;
- figure 6 shows an exploded view of the part of the apparatus in figure 2 with respect to an automatic constraining mechanism;
- figures 7a, b show two perspective views of the mechanism shown in figure 6, with the control device and the tilting element in the positions in figures 4a, b, respectively;
- figure 8a shows a side orthogonal view of two first components of the mechanism in figure 7a according to arrow VIII here shown, with some parts removed to better highlight others;
- figure 8b shows a side orthogonal view of two second components of the mechanism in figure 7a according to arrow VIII here shown, with some parts removed to better highlight others;
- figures 9a, b respectively show the same figures 8a, b illustrating the forces at play on the mechanism in figure 6 following the application of a load F1 to the tilting element;
- figure 10 shows an orthogonal section view of an enlarged detail of the apparatus in figure 3, taken along section plane X-X here shown, with a torsion spring depicted in the wound condition and in the expanded condition;
- figure 11 shows a section perspective view of an apparatus according to a second preferred embodiment of the present invention, illustrated with the tilting element in the first stroke-end position at a specific inclination, the apparatus being provided with a tilting element locking system;
- figure 12a shows a section view of the apparatus in figure 11 according to arrow XII here shown, with the control device in the locking position, the tilting element in a first stroke-end position, and the locking system activated;
- figure 12b shows the apparatus in figure 12a with the control device in the unlocking position, the tilting element still in the first stroke-end position, and the locking system deactivated;
- figure 13a shows a section view of the apparatus in figure 11 according to arrow XIII here shown with the apparatus support structure not shown, with the control device, the tilting element and the locking system in the positions corresponding to figure 12a;
- figure 13b shows a section view of the apparatus in figure 11 according to the arrow XIII here shown with the apparatus support structure not shown, with the control device, the tilting element and the locking system in the positions corresponding to figure 12b;
- figure 13c shows a section view of the apparatus in figure 11 according to arrow XIII here shown with the apparatus support structure not shown, with the control device and the locking system in the positions corresponding to figure 12a and the tilting element at a different angle from the first stroke-end in figure 13a;
- figure 14 shows a perspective section view of an apparatus according to an alternative embodiment, shown with the control device in the locking position;
- figure 15 shows a side orthogonal view of the apparatus in figure 1 according to arrow XV here shown;
- figure 16 shows a perspective section view of the apparatus in figure 14 shown with the control device in the unlocking position;
- figure 17 shows an orthogonal side view of the apparatus in figure 16 according to arrow XVII here shown; and
- figure 18 shows an exploded view of the apparatus in figure 14.

### Detailed description

With reference to the accompanying drawings, an apparatus with a tilting element adjustable in inclination according to the invention is indicated by reference numeral 1 as a whole.

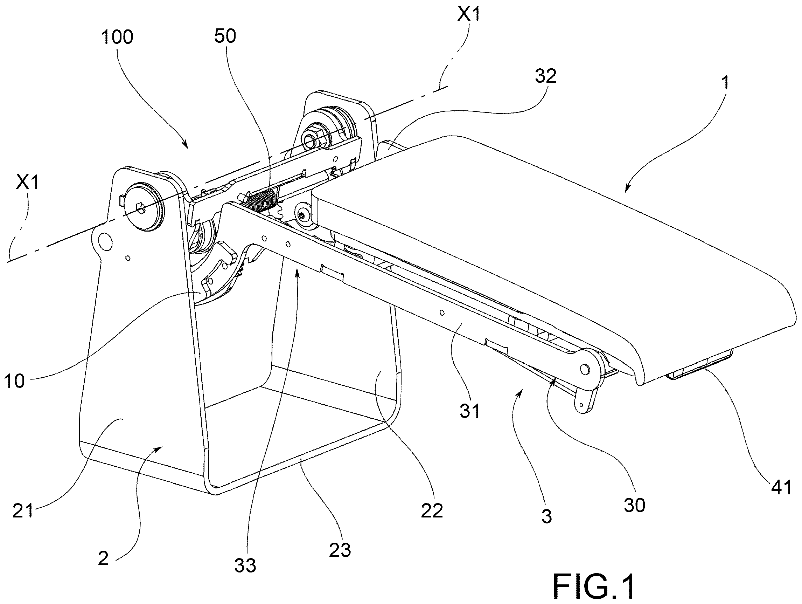

In particular, the apparatus with a tilting element according to the invention can be an armrest of a vehicle, e.g., of a motor vehicle, as shown in the accompanying drawings, in particular in figure 1. For simplicity, the following description will thus be made with reference to an armrest of a motorvehicle, and in this sense the terms "armrest" and "apparatus" are used equivalently. This does not exclude that the apparatus 1 according to the invention can also be other than an armrest, e.g., a seat, a backrest, a footrest, a small table with an adjustable tabletop, or other.

Hereinafter and in the following description and claims, reference will be made to the apparatus or armrest 1 in a condition of use. Any references to a lower or upper position, or to a horizontal or vertical orientation, must thus be understood in this sense.

Here and throughout the description, as well as in the claims, the diameter of a toothed wheel or toothed wheel portion with circular development means the diameter of the primitive circumference of the gear.

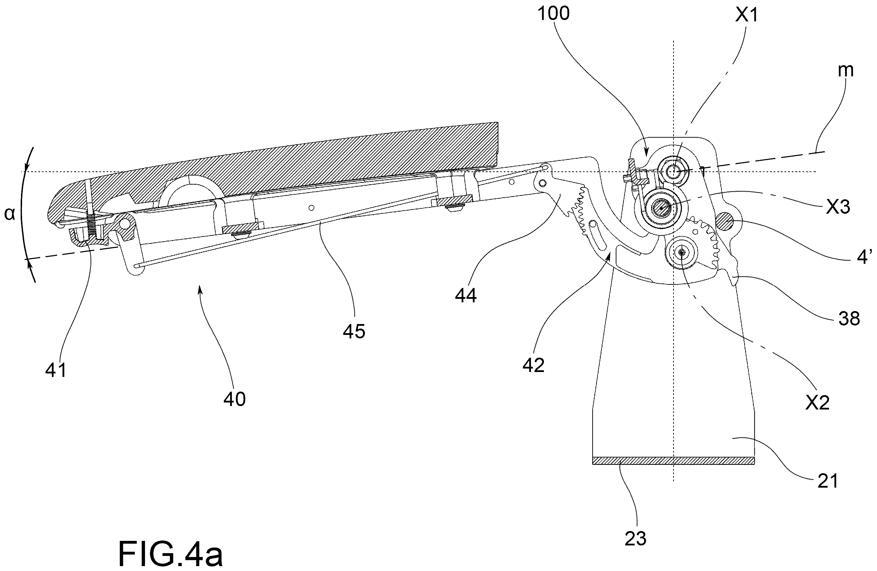

According to a general embodiment of the invention shown in figure 1, for example, the apparatus or armrest 1 comprises a support structure 2 and a tilting element 3, pivoted to the support structure around a first rotation axis X1 to move between a first stroke-end position and a second stroke-end position angularly spaced apart from each other. The first stroke-end defines the normal position of use of the tilting element 1 of the armrest, as shown in figure 4a.

As will be apparent in the following description, the position of the first stroke-end is subject to adjustment, while preferably the second stroke-end is fixed.

In particular, in the specific case in which the apparatus 1 is an armrest in a vehicle, the support structure 2 is intended to be rigidly connected to the vehicle, or it can be slidably attached thereto to allow the armrest to translate horizontally.

In particular, as shown in the accompanying figures and in particular in figure 1, the tilting element is rotationally pivoted to the support structure 2.

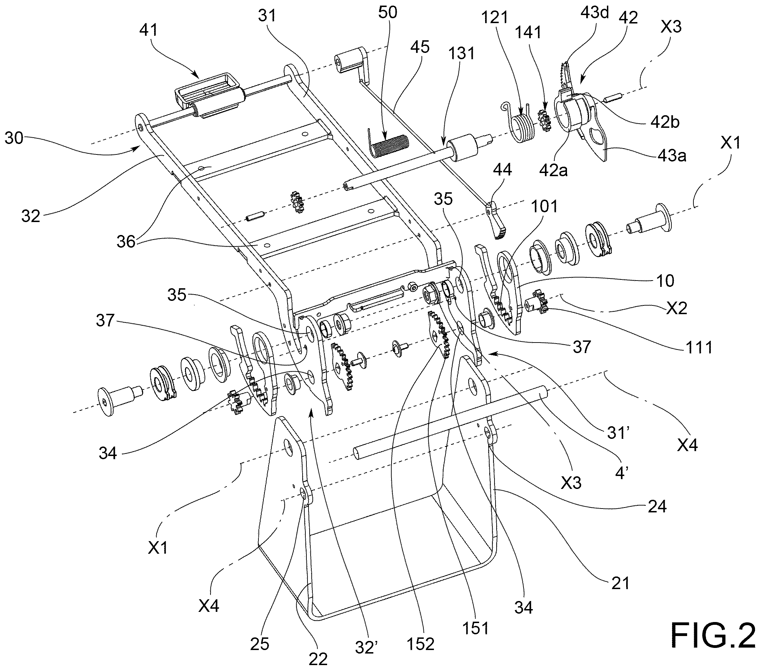

According to the aforesaid general embodiment of the invention, as shown in figures 2, 3, 4a, 4b and 4 c, the apparatus or armrest 1 comprises:
- at least a first abutment 4', fixed onto the support structure; and
- at least one stop body 10 rotationally connected to the tilting body 3 and to the support structure 2 around the first axis X1 and constrainable in rotation to the tilting element.

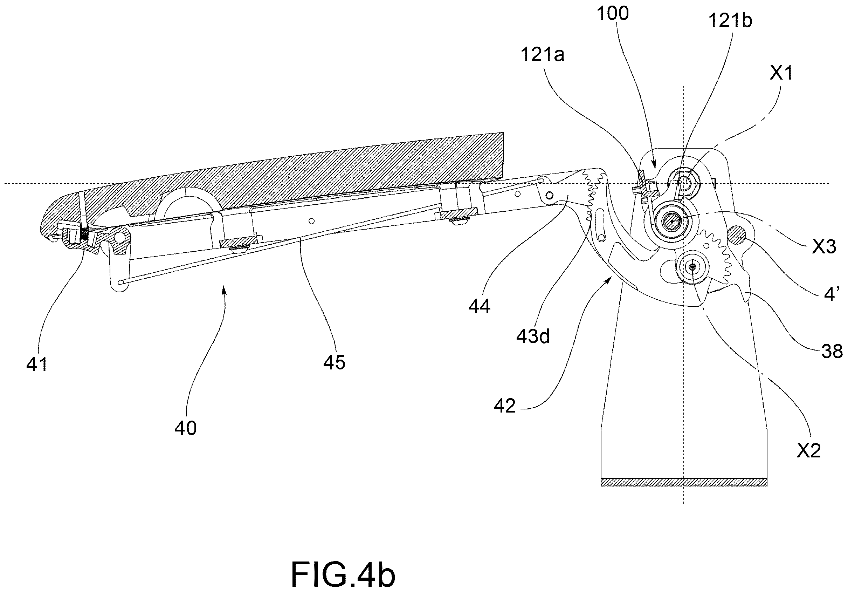

Functionally, the stop body 10, when constrained to the tilting element 3, stops the tilting element at the first stroke-end position by abutting against the first abutment 4' as shown in Figures 4a and 4b.

Preferably, the apparatus or armrest 1 comprises at least a second abutment (not shown), fixed on the support structure 2 at an angularly different position from the first abutment 4'. Such a second fixed abutment defines the second stroke-end position.

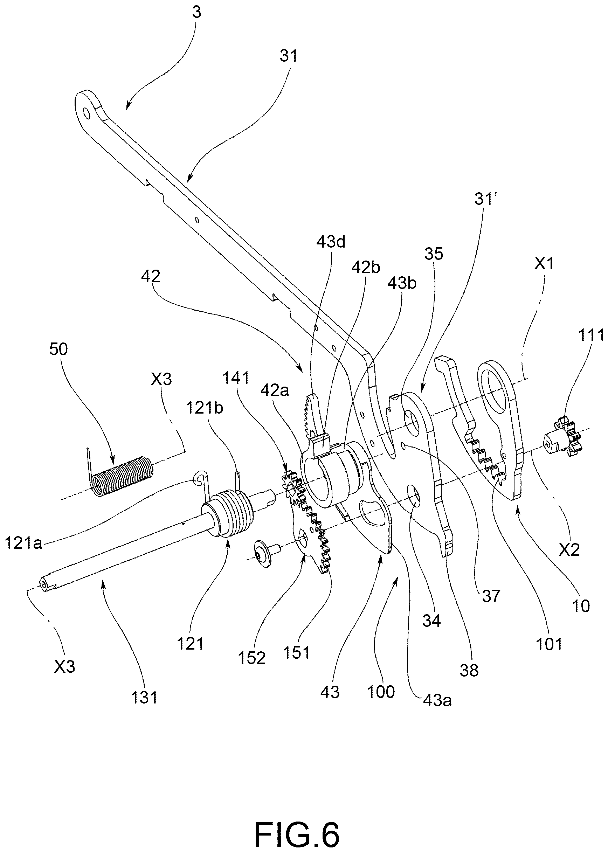

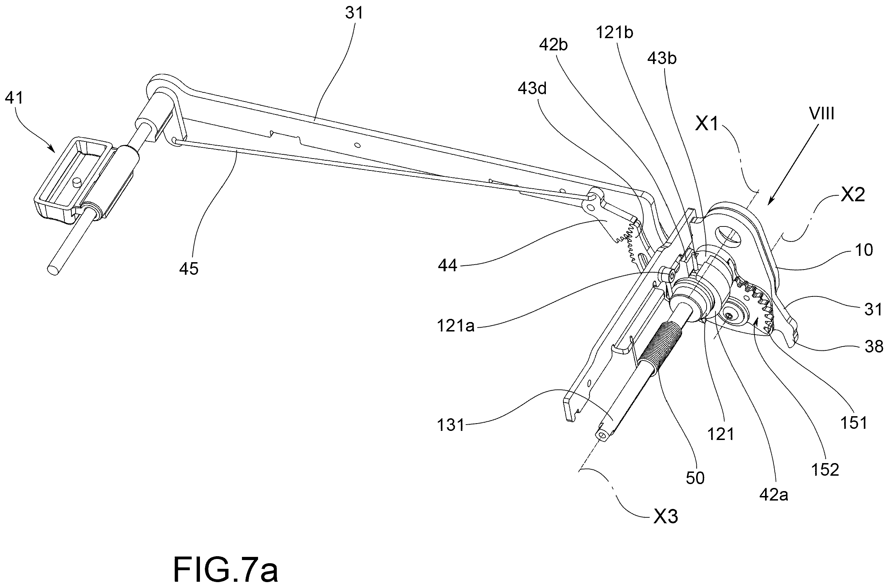

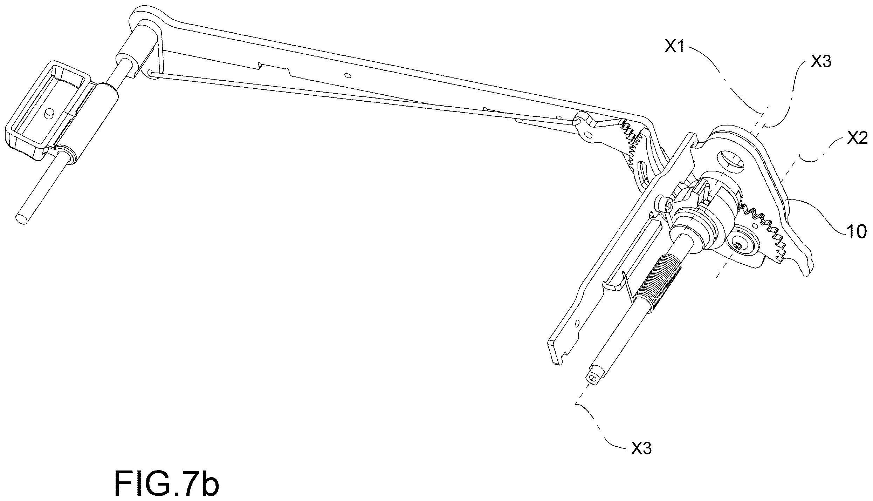

Again, according to such a general embodiment, as shown in figures 6, 7a and 7b, the apparatus or armrest 1 comprises an automatic constraining mechanism 100, suitable to rotationally constrain the stop body 10 to the tilting element 3.

Operatively, the stop body 10, when constrained to the tilting element 3 by means of the automatic constraining mechanism 100, stops the tilting element itself at the first stroke-end position by abutting against the first abutment 4'.

As shown in figures 4a to 5c and figures 7a-b, the apparatus or armrest 1 also comprises a control device 40, which is kinematically connected to the aforementioned automatic constraining mechanism 100 and is movable between:

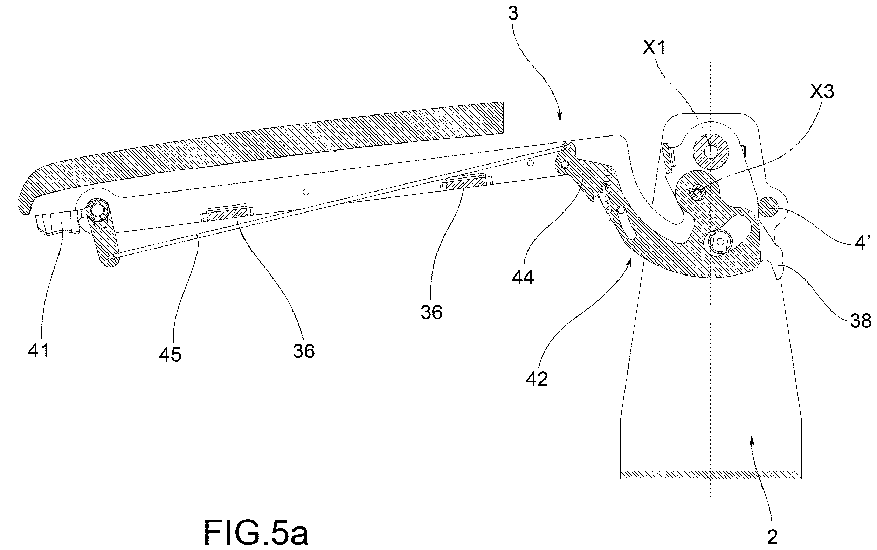

- a locking position, in which it does not oppose the action applied by said automatic constraining mechanism 100 to said stop body 10 (see Figures 4a and 5a), and

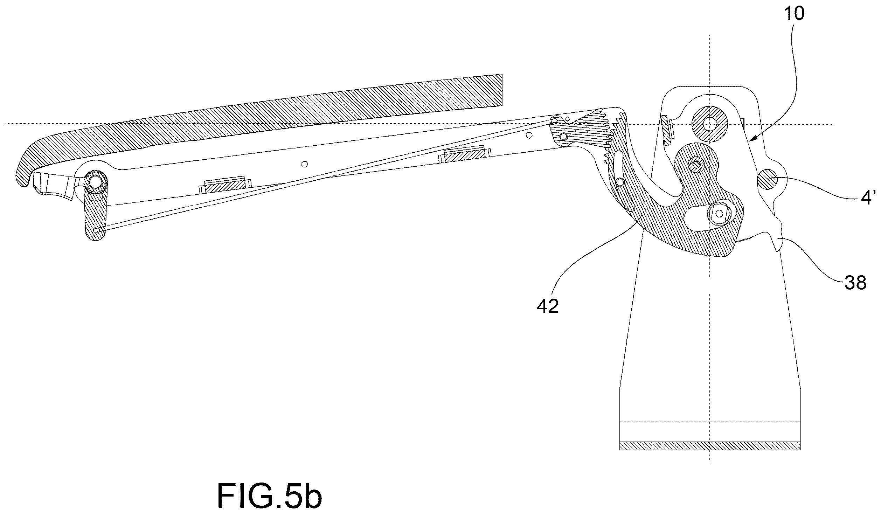

- an unlocking position, in which it opposes the action applied by said automatic constraining mechanism 100 (see figures 4b and 5b).

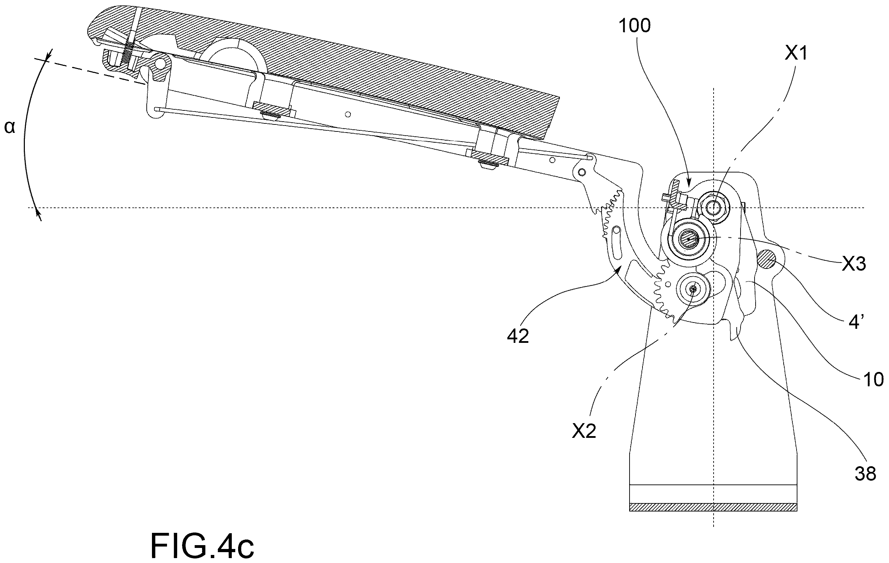

Operatively, as will be taken up more in detail later in the description, the inclination α (see figures 4a and 4c) of the tilting element at the first stroke-end position with respect to a reference plane m passing through the first rotation axis X1 is adjusted in this manner:

- initially, the control device 40 is moved to the unlocked operating position (see figures 4a and 4b and 4c) so that, by varying the inclination angle α of the tilting element 3, the stop body 10 is not driven into motion and the relative position between tilting element 3 and stop body 10 and thus the angular position of the first stroke-end with respect to the reference plane m can be varied; and

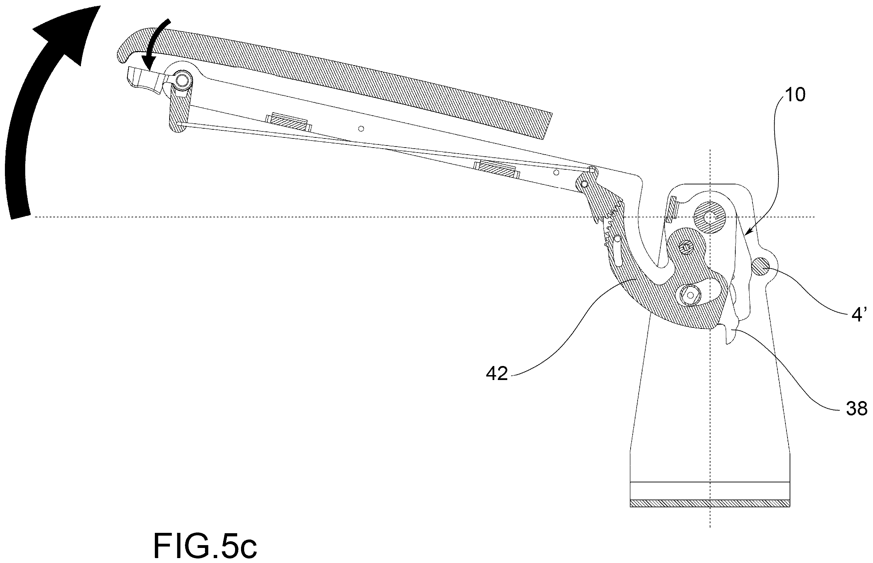

- the control device 40 is then returned to the locking position once the desired inclination angle α is reached (see figures 4c and 5c) so as to lock the stop body 10 against the tilting element again and fix the position of the new first stroke-end.

As shown in figures 6, 7a-b, 8a-b and 9a-b, the aforesaid constraining mechanism 100 comprises a first toothed portion 101, which is obtained on said stop body 10 and extends on an arc of circumference which is concentric with respect to the first rotation axis X1 and has a predefined diameter D2.

As shown in figures 6, 8a and 9a, the constraining mechanism 100 further comprises a first toothed wheel 111 which is meshed on said toothed portion 101 of the stop body 10 and is rotationally connected to the tilting element 3 around a second rotation axis X2 parallel to the first rotation axis X1. Said first toothed wheel 111 has a predefined diameter D3.

Operatively, locking the rotation of said first toothed wheel 111 prevents a relative motion between the first toothed wheel 111 and the first toothed portion 101 and thus between the stop body 10 and the tilting element 3. Therefore, locking the rotation of said first toothed wheel 111 prevents the stop body 10 from rotating with respect to the tilting element 3 around the first rotation axis X1.

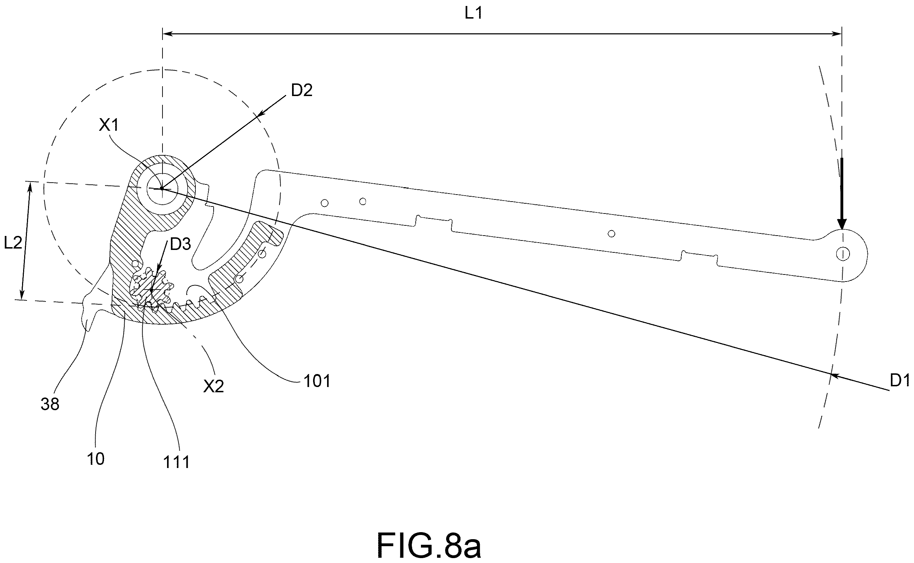

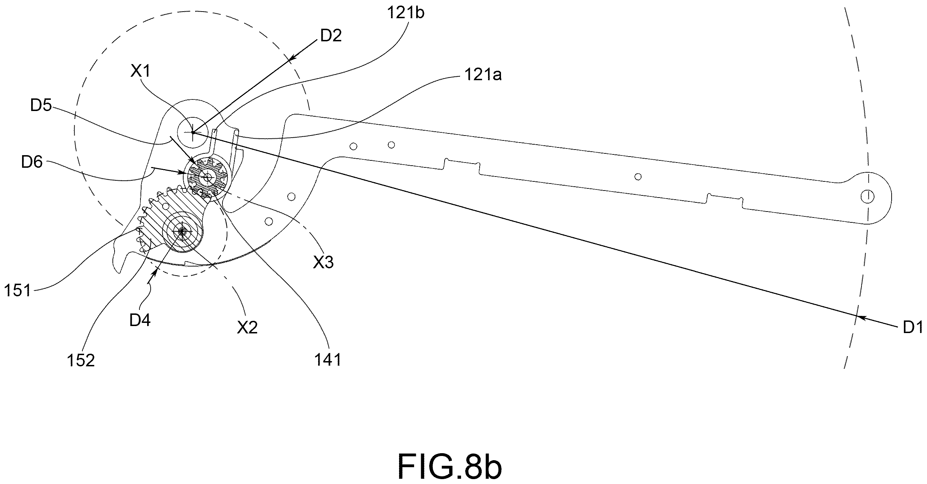

As shown in figures 6, 7a-b, 8b and 9b, the constraining mechanism 100 further comprises a torsion spring 121 which is inserted into said automatic constraining mechanism 100. The torsion spring 121 is preloaded to provide a force Fm suitable to indirectly prevent the rotation of said first toothed wheel 111 by generating a torque sufficient to balance a torque M1 generated by a predefined maximum load F1 applied to the tilting element 3 and transmitted indirectly to the torsion spring 121 by the stop body 10 by means of the automatic constraining mechanism interposed between the spring itself and the stop body. Operatively (see figs. 8 a-b) the maximum arm of application of the maximum load F1 is equal to the distance L1 between the free end of the tilting element 3 and the first rotation axis X1. Therefore, the maximum torque M1 generated by a load F1 applied to the tilting element 3 is equal to M1 = F1xL1.

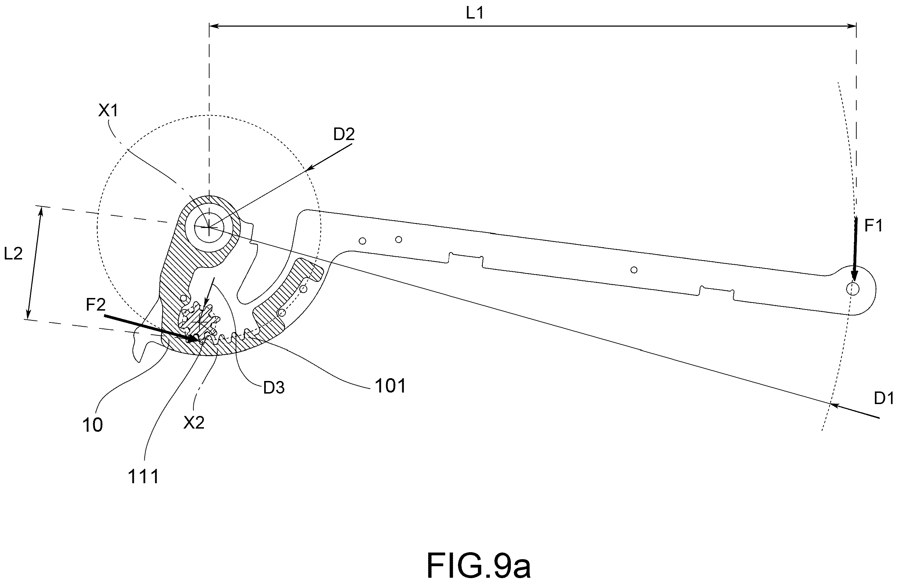

As shown in figure 9a, being the stop body 10 resting on the first abutment 4', the application of a load F1 generates a reaction force F2 on the stop body 10 with an application arm with respect to the first rotation axis X1 equal to the half-diameter D2/2 = L2 of the first toothed portion. By virtue of the automatic constraining mechanism 100, the stop body 10 and the tilting element 3 form a single rigid body with torque transfer. As a result, M1 = F2 x L2 = F1 x L1 and thus F2=F1x(L1/L2). In order to counterbalance the force F2 transmitted from the stop body to the first toothed wheel 111 thus preventing the rotation of the stop body 10, it is necessary to apply a torque M2 = F2 x D3/2, where D3 is the diameter of the first toothed wheel 111, to the first toothed wheel 111.

Operatively, even in the absence of a load applied to the tilting element 3, the torsion spring 121 prevents the rotation of the first toothed wheel 111. The action of said torsion spring 121 is counteracted, and thus the rotation of the first toothed wheel 111 released, when said control device 40 moves from said locking position to said unlocking position (see figs. 7 a-b).

According to a first aspect of the invention (see fig. 6), the torsion spring 121 is wound around a rotation pin 131 rotationally connected to the tilting element 3 around a third rotation axis X3 which:
- is parallel to the first rotation axis X1 and to the second rotation axis X2; and
- is at an intermediate position between said two axes X1, X2.

The torsion spring 121 has a predefined winding diameter D6 (see fig. 8b).

According to a second aspect of the invention, unlike the technical solution of the prior art, the aforesaid automatic constraining mechanism 100 consists of a gear which is suitable to kinematically connect the rotation of the first toothed wheel 111 to the rotation pin 131 (on which said torsion spring 121 is wound) indirectly by means of an intermediate transmission stage.

By virtue of the invention, it is thus possible to position the rotation pin 131 closer to the first rotation axis X1 of the tilting element, moving the rotation pin 131 itself and the torsion spring 121 away from a zone of the apparatus (armrest) 1, which in the automotive field is intended for the passage of electrical cables and air ducts. In such a manner, the automatic constraining mechanism 100 according to the present invention is suitable for installation in narrow and confined spaces.

Preferably, the aforesaid intermediate transmission stage is a reduction stage. In such a manner, unlike the prior art, it is possible to have two reduction stages instead of a single reduction stage in the kinematic chain for the transmission to the torsion spring 121 of the load applied to the tilting element 3, while having more freedom in sizing the stop body 10 with the possibility of greatly reducing the L1/L2 ratio.

In the prior art, the availability of a single reduction stage and the presence of space limitations posed constraints on the possibilities of reducing the transmission coefficient, which did not allow adequate containment of the load bearing on the torsion spring. This resulted in the need to install particularly strong torsion springs, with the effect of requiring the user to apply non-negligible loads to the control device to deactivate the torsion spring or to introduce electromechanical devices.

By virtue of the invention, the applied load F1 and the arm load L1 being the same, the introduction of an intermediate transmission stage (preferably a reduction stage) into the kinematic chain allows for a further significant reduction in the load bearing on the torsion spring while continuing to have space constraints.

By virtue of the invention, the apparatus 1 with a tilting element adjustable in inclination still allows a continuous (stepless) adjustment of the tilting element without using electromechanical devices and at the same time has a control device mechanically operable by the user with application of small loads so that it can be used ergonomically, due to the more favourable gear ratio.

Preferably, the automatic constraining mechanism 100 defines a three-stage transmission kinematic system, where preferably at least the intermediate stage is a reduction stage. Even more preferably, two out of three transmission stages are reduction and only one is multiplication, albeit attenuated by virtue of the greater freedom in sizing of the stop body with respect to the first rotation axis X1. However, a kinematic chain with an intermediate reduction stage, a neutral transmission stage and a multiplication stage can be provided.

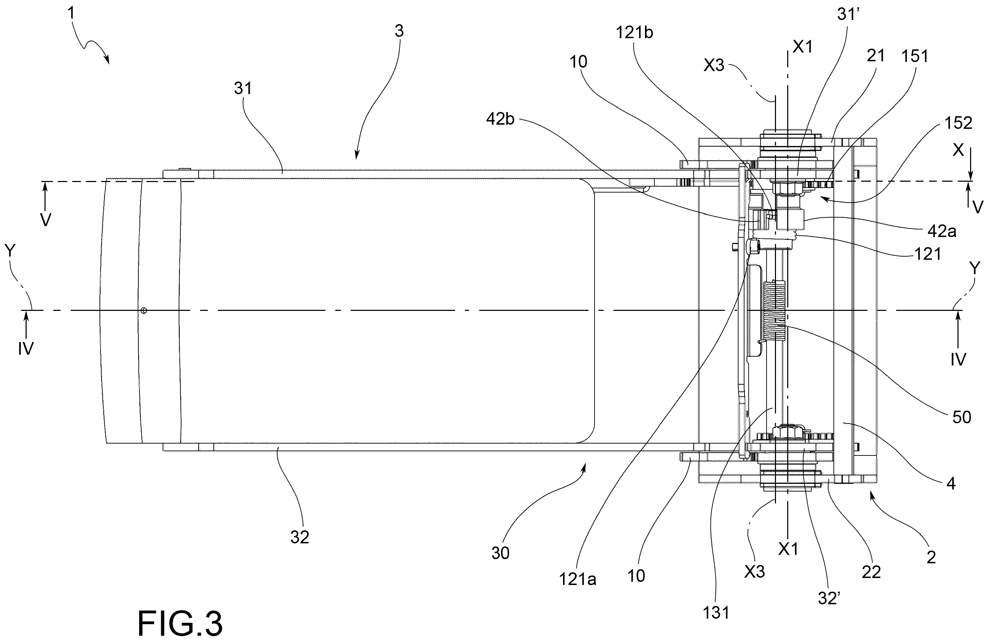

Advantageously, as shown in the accompanying figures (see figures 2 and 3), the apparatus or armrest 1 can comprise two stop bodies 10, which are arranged in opposite positions along said first rotation axis X1 and both intended to abut against the first abutment 4' to stop the tilting element in the first stroke-end position. The apparatus 1 further comprises an automatic constraining mechanism 100 for each stop body 10. Preferably, the two mechanisms share the same rotation pin 131 and the same torsion spring 121. Such an embodiment allows distributing the strains in the armrest 1 more uniformly, ensuring superior reliability.

For simplicity of disclosure, reference has been and will be made (unless otherwise indicated) to a single stop body. However, the description must also be extended to the (preferred) case in which there are two stop bodies, according to the embodiment specifically illustrated in the accompanying figures.

According to a preferred embodiment of the invention, shown particularly in figures 6, 8b and 9b, the gear of said automatic constraining mechanism 100 comprises a second toothed wheel 141 which is fitted onto said rotation pin 131 and has a predefined diameter D5.

Referring again to figures 6, 8b and 9b, the gear of said automatic constraining mechanism 100 further comprises a second toothed portion 151 which is obtained on a transmission member 152 which is rotationally integral with said first toothed wheel 111 and is meshed onto said second toothed wheel 141. Such a second toothed portion 151 extends on an arc of circumference concentric to the second rotation axis X2 and has a predefined diameter D4.

The presence of said transmission member 152 defines said intermediate transmission stage.

The diameter D4 of the second toothed portion 151 is greater than the diameter D3 of the first toothed wheel 111, thereby defining said intermediate stage as a reduction stage.

Preferably, the winding diameter D6 of the torsion spring 121 is greater than the diameter D5 of the second toothed wheel 141, thereby defining a second reduction stage in the kinematic chain of said automatic constraining mechanism.

According to an alternative embodiment, not shown in the accompanying figures, the winding diameter D6 of the torsion spring 121 can be equal to the diameter D5 of the second toothed wheel 141, thereby defining a neutral transmission stage in the kinematic chain of said automatic constraining mechanism 100.

Referring now to figures 8a, b, 9a, b and 10, the parameters of the automatic constraining mechanism gear 100, which define the gear ratio, are identified.

As already stated above, having fixed the maximum load F1 applicable to the tilting element 3 (fig 9a), the maximum arm of application of the load F1 being equal to the distance L1 between the free end of the tilting element 3 and the first rotation axis X1, the maximum torque M1 generated by such a load F1 applied to the tilting element 3 is thus equal to M1 = F1xL1.

In order to lock the rotation of the stop body 10 by means of the first toothed wheel 111, it is necessary to apply to the latter a torque M2 = F2 X D3/2 suitable to counterbalance the force F2 discharged on the first toothed portion 101 by effect of the moment transfer M1, where D3 is the diameter of the first toothed wheel 111.

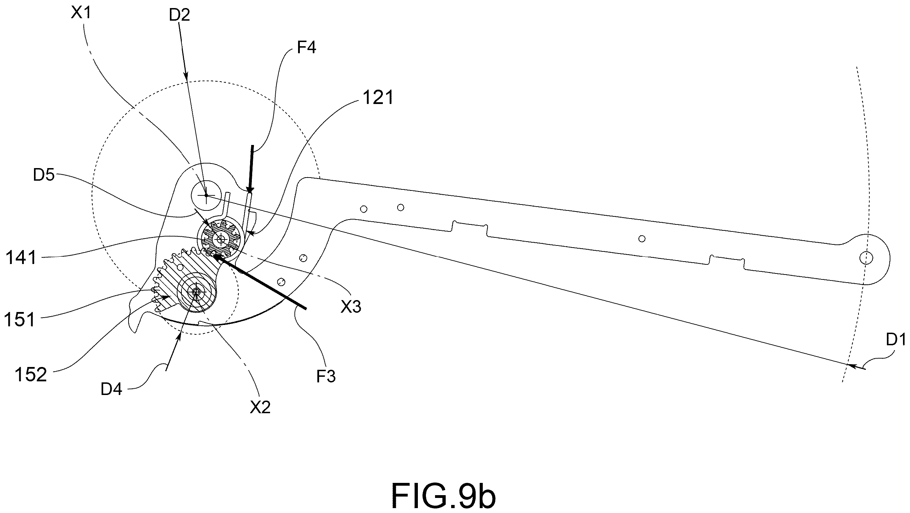

Being the first toothed wheel 111 integral with the transmission member 152, there is moment transfer. Therefore, indicating with F3 the force transferred from the second toothed portion 151 to the second toothed wheel 141 (Fig. 9b), the torque M2 transferred from the first toothed wheel 111 to the transmission member 152 and the second toothed portion 151 can be expressed as M2 = F3 x D4/2, where D4 is the diameter of the second toothed portion 151. So, it can be derived that F3==F2x(D3/D4)= F1×(L1/L2)×(D3/D4).

Indicating with F3 the force transferred to the second toothed wheel 141 (Fig. 9b), the torque M3 to be applied to the second toothed wheel can be expressed as M3=F3 x D5/2, where D5 is the diameter of the second toothed wheel 141.

Indicating with F4 the force received by torsion spring 121 (Fig. 9b), the torque M3 transferred from the second toothed wheel 141 to the torsion spring 121 by means of the rotation pin 131 can be expressed as M3=F4xD6/2, where D6 is the winding diameter of the torsion spring 121. It can be derived that F3 x D5/2 = F4 x D6/2 and thus that F4 = F3 (D5/D6). Expressing F3 as a function of F2, it follows that F4 = F2 (D3/D4) (D5/D6). Finally, expressing F2 as a function of F1, it follows that F4 = F1 (L1/L2) (D3/D4) (D5/D6).

For construction reasons, in particular if the apparatus 1 is an armrest for cars, L1 is greater than L2. However, being D3<D4 and D5<D6 according to the invention, with the same maximum load F1 applied to the tilting element 3, fixed the ratio L1/L2, the load F4 bearing on the spring 121 is reduced by a factor of (D3/D4) (D5/D6) less than 1.

Compared with the solution of the prior art, having fixed the value of D5/D6, by virtue of the invention the load F4 bearing on the spring 121 is thus reduced by an additional factor of (D3/D4) less than 1.

By virtue of the invention, as mentioned above, the size constraints are less penalizing because, being possible to distance the third rotation axis X3 from the second rotation axis X2 and bring it closer to the first rotation axis X1, the value of L2 can be increased.

In particular, (Figs. 7a-b), the torsion spring 121 has a first end 121a constrained to the tilting element 3 and a second end 121b kinematically associated with the control device 40 so that, when the control device is in the unlocking position (fig. 7b), such a second end 121b is subjected to a force which, by counteracting the elastic force of the spring, loosens the grip of the spring on the rotation pin 131 and releases the rotation of the pin on itself and of the associated second toothed wheel 141.

According to the embodiment shown in the accompanying figures (figs. 3 and 4a-5b), the control device 40 comprises a drive element 41, movable between at least two different positions, corresponding to the locking position and the releasing position, respectively.

With reference to figures 7 (a-b), the control device 40 further comprises an actuator 42 which engages the second end 121b of the torsion spring 121 and is movable in rotation around a rotation axis parallel to the first rotation axis X1 to move between:
- a passive position (fig 7a), in which said actuator 42 does not contrast said torsion spring 121 and
- an active position (Fig. 7b), in which said actuator 42 contrasts said torsion spring 121.

As shown for example in figure 7a, the control device 40 further comprises kinematic connection means 44, 45 which connect the drive element 41 to said actuator 42 so that the unlocking position of the drive element 41 corresponds to the active position of the actuator and the locking position of the drive element 41 corresponds to the passive position of the actuator.

Advantageously, said actuator 42 comprises a support body 43 by means of which the actuator 42 is rotationally connected to the tilting element 3 and is mechanically associated with said kinematic connection means of the control device 40.

Preferably, as shown in particular in figures 6 and 7a, the rotation axis of said actuator 42 coincides with the third rotation axis X3 around which said rotation pin 131 rotates. In this case, the actuator 42 comprises a first bushing 42a which is axially supported cantilevered by said support body 43 to be coaxially fitted on said torsion spring and is circumferentially interrupted by a radial appendage 42b by means of which said first bushing 42a engages the second end 121b of the spring 121. Such a solution has the advantage of offering compactness and at the same time a balanced distribution of strains on the actuator 42.

Advantageously, as shown in figures 6 and 7a-b, the support body 43 comprises:
- a main body 43a by means of which said actuator 42 is pivoted on said rotation pin 131 and
- a second bushing 43b which is coaxial to said first bushing 42a and acts as a spacer between said main body 43a and said first bushing 42a.

As shown in figures 7 a-b, said second bushing 43b internally houses the second toothed wheel 141 and is circumferentially open to allow the transmission member 152 to mesh on the second toothed wheel 141, rotating around the second rotation axis X2 between said main body 43a and said first bushing 42a. Such a solution contributes to increase the compactness of the automatic constraining mechanism by allowing a partial overlap in the axial direction of the components.

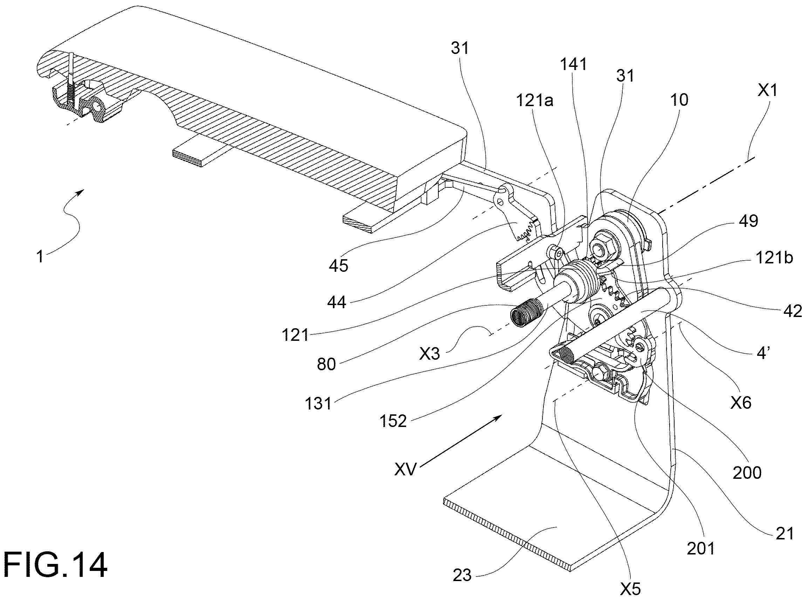

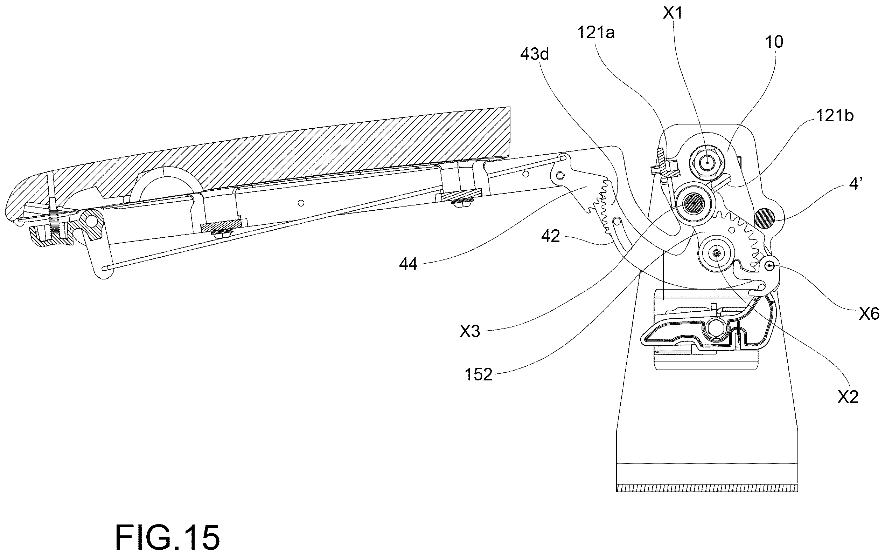

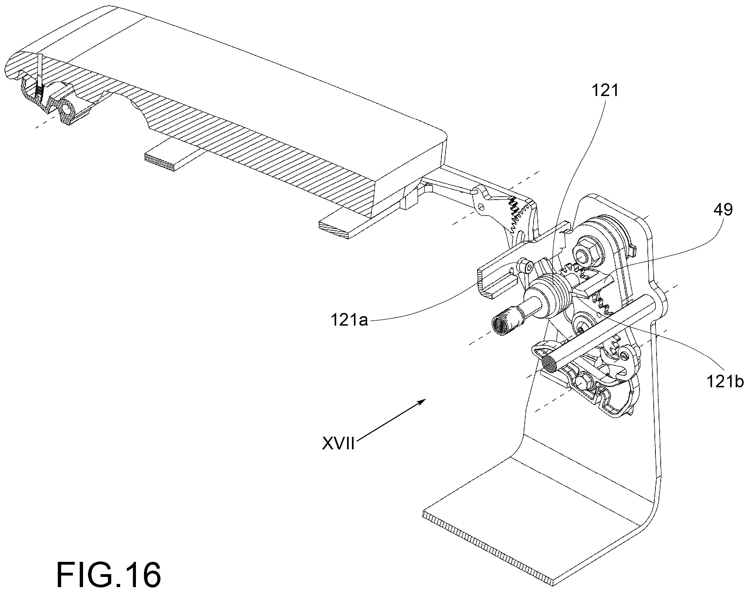

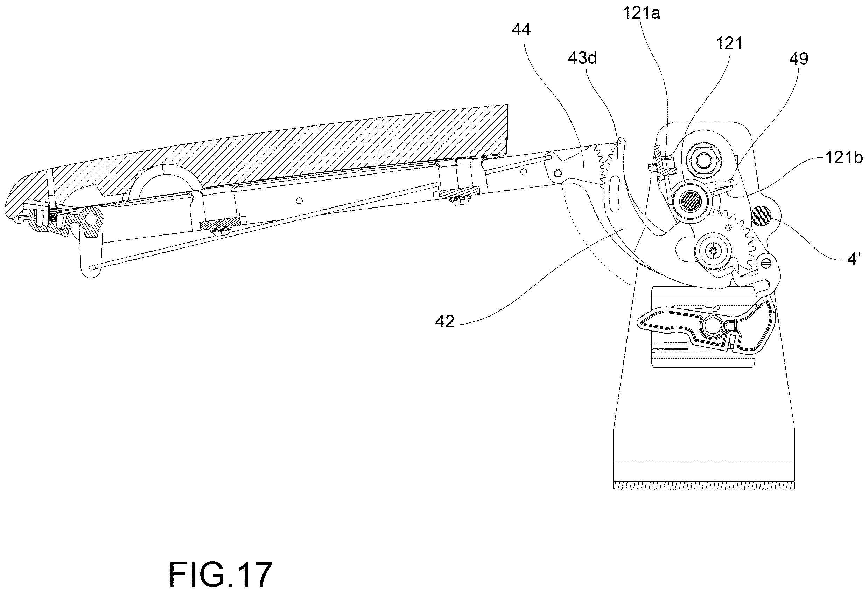

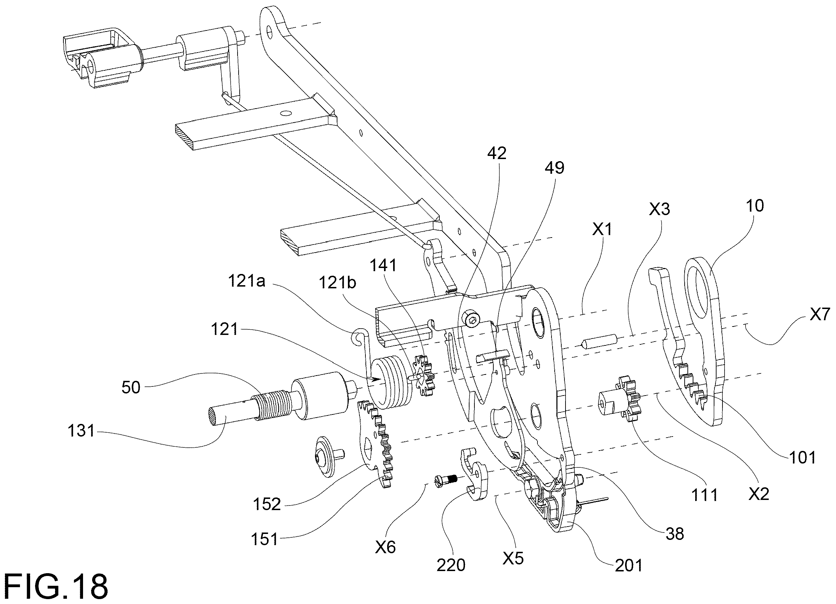

According to the embodiment shown in figures 14 to 18, the rotation axis X7 of said actuator 42 can be distinguished from the third rotation axis X3 around which the rotation pin 131 rotates. In this case, the actuator 42 comprises:
- a main body 43a by means of which said actuator 42 is pivoted on said tilting element 3; and
- a tooth 49 extending cantilevered from said main body 43a in a position radially offset with respect to the rotation axis X7 of said support body 43 to engage the second end 121b of the spring 121.

Operatively, as shown in figures 14-15 (control device in locking position) and 16-17 (control device in locking position) by means of the tooth 49 the rotation of the main body 43a causes or not the expansion of the torsion spring 121.

Preferably (figures 4a-5c), the aforesaid kinematic connection means comprise a gear between a portion 43d of the support body 43 and a rotating member 44 which can be driven in rotation by the movement of said drive element 41 between said unlocking position and said locking position. For example, as shown in figures 4a, b and c, the connection between the drive element 41 and the rotating member 44 is made by means of a rod 45.

According to the preferred embodiment shown in particular in figures 2 and 3, the tilting element 3 comprises a support frame 30.

In turn (fig. 3), the support frame 30 comprises two arms 31, 32 which extend lengthwise parallel to an armrest axis Y orthogonal to the first rotation axis X1.

Each arm 31, 32 is pivoted at a tilting end 31', 32' thereof to said fixed structure 2 to rotate around said first rotation axis X1 (figs. 2 and 3).

Preferably, as shown in particular in figure 2, the two arms 31, 32 consist of two plates, shaped according to the longitudinal development of the armrest. The two plates 31 and 32 are connected by means of one or more spacers 36 to define a technical compartment 33. The two plates have two first holes 35 aligned along the first rotation axis X1, at which the two arms of the tilting element 3, as well as the stop body 10, are pivoted.

Preferably, (figs. 2, 3 and 6), the rotation pin 131 of the automatic constraining mechanism 100 is rotationally supported by said two arms 31, 32.

In particular (figs. 1 and 2), the support structure 2 comprises two uprights 21, 22 on which the tilting element 3 is pivoted. The two uprights 21, 22 can be mutually connected by a base 23 to form a single body consisting of a C-shaped or U-shaped body, for example.

Preferably, (figs. 2 and 3) the single or two stop bodies 10 and the corresponding first toothed wheels 111 are placed between the tilting element 3 and the support structure 2, while the rest of the automatic constraining mechanism 100 is placed between the two arms 31 and 32. For such a purpose (fig. 2), the tilting element 3 is provided with a through opening 34 to allow the axial connection along the second rotation axis X2 between first toothed wheel 111 and transmission member 152.

Preferably, (fig. 2) the first fixed abutment 4' is defined by a rod which extends longitudinally along a fourth axis X4 parallel to the first rotation axis X1 and is rigidly fixed at the two ends thereof to the two uprights 21 and 22 at holes 24 and 25.

The two plates 31 and 32 of the tilting element have two second holes 37 aligned along the second rotation axis X2 at which the rotation pin 131 is rotationally inserted (fig. 2). Such a rotation pin 131 is arranged in the inner space 33 between the two plates 31 and 32 which form the arms of the tilting element 3.

The control device 40 is arranged in the technical compartment 33 between the two plates 31 and 32, and in particular - as shown in Figures 1 and 2 - the rotating member 44 and the transmission rod 45. The drive element 41 is arranged, in particular, at the free end of the tilting element 3.

Advantageously, as shown in figure 2, similarly to the two arms 31, 32 of the titling element 3, also the main body 43a (fig. 6) of the support body of the actuator 42, the transmission member 152 and the stop body 10 each consist of a shaped plate and are assembled so that the faces of the respective shaped plates are parallel to each other. Such a solution allows the automatic constraining mechanism to be structured and associated with the tilting element 3 as a highly compact multilayer package. This allows it to be installed even in tight spaces (such as those provided in an automotive armrest) without losing functionality, significantly reducing the space occupied internally by the tilting element 3 and the support structure 2.

In particular, the compactness of the constraint mechanism as well as the installation thereof aboard the tilting element allows the automatic constraining mechanism to remain confined to the manoeuvring space of the tilting element itself. As a result, as shown in figures 4a, b, c, the space 33 (fig 1) inside the support structure not intended for the movement of the tilting element 3 remains free.

This is particularly important in an automotive armrest, where the space inside support structure 2 is usually dedicated to housing air passage tunnels or electrical system.

More in detail, (figs. 2 and 6) the first toothed portion 101 and the second toothed portion 141 are obtained along the peripheral edge of the shaped plates which form the stop body 10 and the transmission member 152.

Preferably, (figs. 1, 2. 3) the apparatus 1 comprises motor means 50 suitable to provide - directly or indirectly - a driving torque to the rotation pin 131 to impart a rotation to the first toothed wheel 111 causing a relative motion between the first toothed wheel 111 and the stop body 10 and thus between the tilting element 3 and the stop body 10 when the control device is in the unlocking position.

Such motor means 50 are configured and sized to provide a driving torque to the rotation pin 131 and thus to the entire kinematic system with a direction such as to push the stop body 10 against the first abutment 4'. For such a purpose, such a drive torque must have a value at least sufficient to overcome the internal frictions of the automatic constraining mechanism 100.

According to a preferred embodiment of the invention, shown in figures 1, 2 and 3, the aforesaid motor means consist of a second torsion spring 50 which is wound around the rotation pin 131 and has an end 51 constrained to the tilting element 3.

As an alternative to the torsion spring, the aforesaid motor means can consist of electric motors keyed directly or by means of a reducer to the same rotation pin 131.

Alternatively, the aforementioned motor means can consist of electric motors keyed to one of the parts connected to the aforementioned rotation pin 131 and involved in the adjustment and movement of the tilting element 3.

According to an embodiment of the invention (not shown in the accompanying figures), the apparatus 1 can comprise at least one actuator suitable to apply a force acting directly on said stop body 10 to cause a relative motion between first toothed wheel 111 and stop body 10 and thus between the tilting element 3 and the stop body 10 when the control device 40 is in the unlocking position. In particular, such an actuator can consist of an air spring or a pneumatic cylinder.

By virtue of the presence of the aforementioned motor means, the apparatus 1 generates a relative movement between the stop body 10 and the tilting element 3 concordant with the rotation in the step of lifting of the tilting element. In this manner, the apparatus 1 assists the user in the lifting movement of the tilting element. Therefore, an assisted movement which increases the comfort of use is present.

According to an alternative embodiment (not shown in the accompanying figures), the apparatus 1 cannot be equipped with motor means. The automatic constraining mechanism, once deactivated, it can only be moved directly by the users themselves by manual lifting the tilting element and no longer be moved automatically. In this case, preferably, the apparatus 1 can comprise at least one friction element which is arranged between the stop body 10 and the support structure 2 and is sized so that:
- when the control device 40 is in the locking position, the friction generated between the stop body 10 and the tilting body 3 is greater than the friction generated between the stop body 10 and the support structure 2 so that the moving tilting element drags the stop body therewith, and
- when the control device 40 is in the unlocking position, the friction generated between the stop body 10 and the tilting body 3 is lower than the friction generated between the stop body 10 and the support structure 2 so that the moving tilting element does not drag the stop body therewith. In particular, the aforementioned friction element can be either sliding friction systems or magnetic systems.

According to an embodiment, (not shown in the accompanying figures), the apparatus 1 can comprise at least one counterweight associated with the stop body 10. Such a counterweight (preferably associated with the stop body 10) is sized and positioned with respect to the first rotation axis X1 and the first stop 4' so that, when the control device 40 is in the unlocking position, the stop body 10 assumes a stable position only if it is resting against the first abutment 4'.

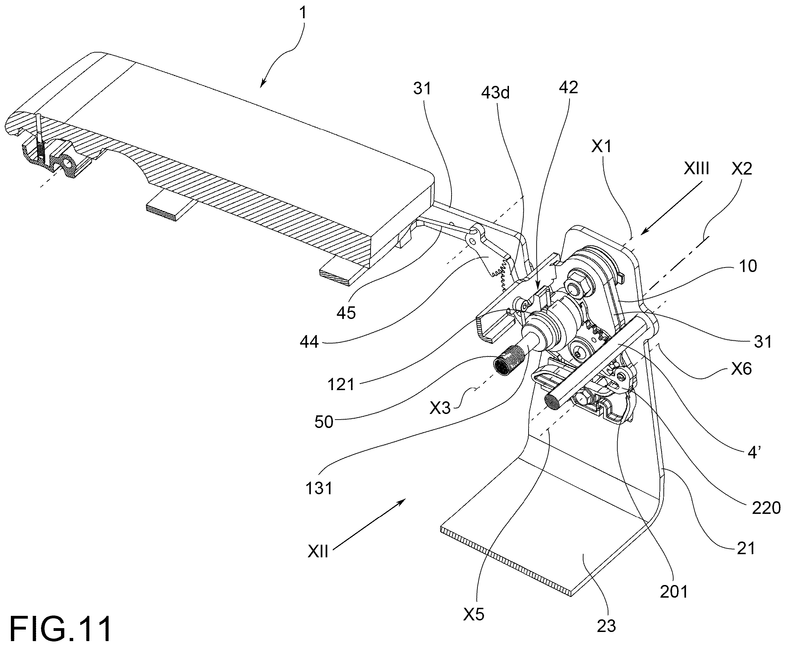

According to a second preferred embodiment shown in figures 11 to 13c, the apparatus 1 additionally comprises a locking system 200 suitable to lock the rotation of the tilting element 3 around the first rotation axis X1.

Operatively, such a locking system 200 performs a safety function by preventing the accidental lifting of the tilting element if the vehicle equipped with the apparatus 1 is subject to an accident.

The apparatus 1 of said second preferred embodiment corresponds to the apparatus 1 described in the first preferred embodiment, to which the aforementioned locking system 200 was added. Therefore, the above description also applies to the apparatus 1 provided with the locking system. For brevity of disclosure, such a description will not be given again, but reference will be made thereto in its entirety, adding only what is related to said locking system 200.

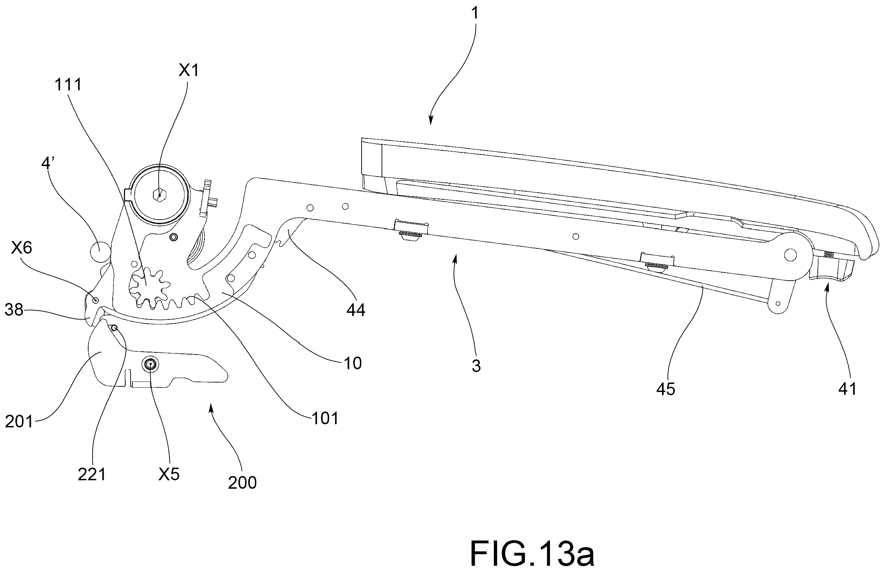

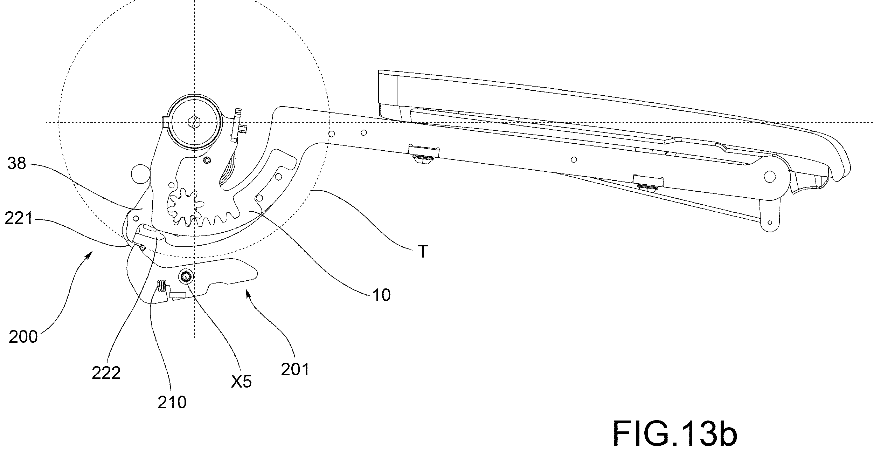

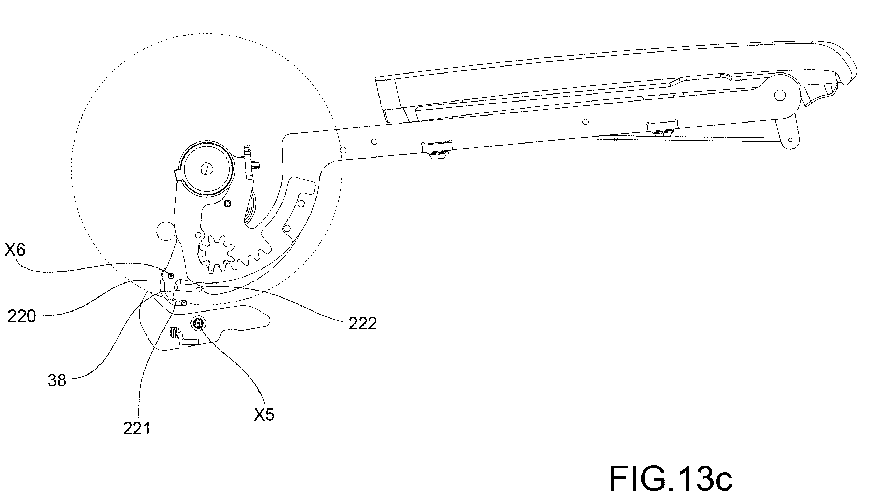

More in detail, as shown in figures 13a, b, c, the apparatus 1 comprises an appendage 38 which protrudes from said tilting element 3.

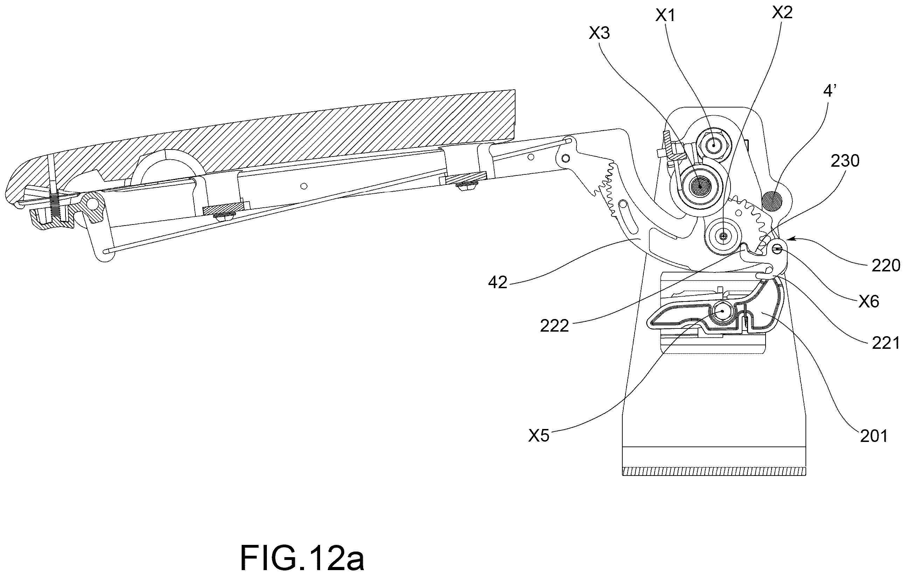

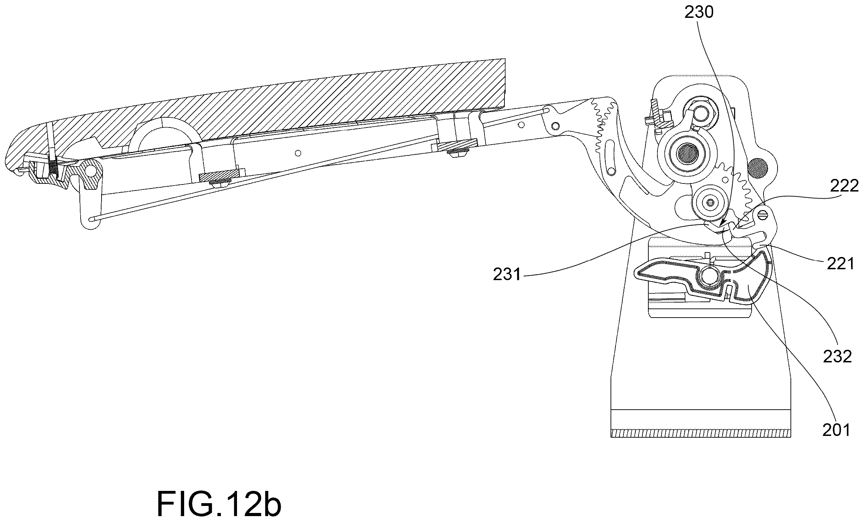

In turn, (figs. 12a, b and 13a, b, c) the locking system 200 comprises a locking harpoon 201, which is rotationally supported by the support structure 2 of the apparatus 1 around a fifth rotation axis X5 parallel to the first rotation axis X1 to be movable between:
- a first position, in which said locking harpoon 201 engages said appendage 38 preventing the rotation of the tilting element 3 around the first rotation axis X1 (see figures 12a and 13a), and
- a second position, in which said locking harpoon 201 does not engage said appendage 38 leaving free rotation of the tilting element 3 around the first rotation axis X1 (see figures 12b, 13b and c).

The locking system 200 further comprises a pushing device 210, preferably an elastic element, which is configured to automatically maintain said harpoon 201 in the first position (figs. 13b, c).

With reference to figures 12a, b, the apparatus 1 comprises an unlocking harpoon 220 which is rotationally supported around a sixth rotation axis X6 parallel to the first rotation axis X1 and is movable by a control device around said sixth rotation axis X6 with respect to said locking harpoon so as to bring the latter from said first position to said second position, contrasting the action of said thrust device 210.

The control device of said unlocking harpoon 220 coincides with the control device 40 of said automatic constraining mechanism 100.

According to the embodiment shown in figures 11 and 12a, b, the unlocking harpoon 220 is installed on board said tilting element 3, preferably near or at said appendage 38, and comprises:
- a first protrusion 221, with which it engages said locking harpoon 201; and
- a second protrusion 222, which is kinematically connected to the actuator 42 of said control device 40 so that said actuator 42, when switching from said passive position to said active position, moves said unlocking harpoon 220, thus pushing the locking harpoon 201 from said first position to said second position.

Operatively, the drive element 41 is thus movable between at least three different positions, corresponding to respectively:
- the locking position of the automatic constraining mechanism 100 (corresponding to absence of pressure on the control member 41);
- the unlocking position of the automatic constraining mechanism (corresponding to the full pressure of the control member 41); and
- an intermediate position between the previous two, having reached which the locking harpoon 201 is in the second position.

Advantageously, when the drive element 41 is in the intermediate position, it is possible to release the simple rotation of the tilting element 3 without operating the automatic constraining mechanism 100, leaving the adjustment of the first end position unchanged.

More in detail, the apparatus 1 can then be used as follows:
- to simply raise the tilting element 3, it is necessary to bring the drive element 41 to the aforementioned intermediate position and then proceed to raise the tilting element (by rotating it);
- to adjust the inclination of the tilting element 3, it is necessary to bring the drive element 41 from the intermediate position to the unlocking position, such an operation (aimed at the adjustment) being carried out before, during or after lifting the tilting element 3; lifting the tilting element being possible only after bringing the drive element 41 to the intermediate position.

Advantageously, (figs. 12a, b) the second protuberance 222 of the unlocking harpoon 220 is slidingly engaged on the support body 43 of the actuator 42 of said control device 40 at a guide groove 230 which is cut on said support body 43 and acts as a cam.

Said guide groove 230 runs in two interconnected sections (figure 12b):
- a first active section 231, along which the supporting body 43 in its rotation around the third rotation axis X3 imposes a rotation on the unlocking harpoon, and
- a second neutral section 232 along which the supporting body 43 in its rotation around the rotation axis X3 or X7 thereof does not impose a rotation on the unlocking harpoon.

The first active section 231 has an extension in length such as to cause a sufficient rotation of the unlocking harpoon to result in the locking harpoon switching from the first to the second position.

The apparatus 1 having a tilting element adjustable in inclination according to the invention thus comprises a tilting element locking system easily manageable by the user by means of the same control device which manages the adjustment of the tilting element inclination.

Preferably, as mentioned above, the apparatus 1 according to the present invention is an armrest, in particular for vehicles.

The invention provides numerous advantages, some of which have already been described.

The apparatus 1 with a tilting element adjustable in inclination according to the invention allows a continuous (stepless) adjustment of the tilting element without using electromechanical devices and at the same time has a control device mechanically operable by the user with application of small loads so that it can be used ergonomically.

The apparatus 1 with a tilting element adjustable in inclination according to the invention has an adjustment mechanism which can simultaneously provide high load capacities at low actuating forces on the operating elements.

The apparatus 1 with tilting element adjustable in inclination according to the invention has a very compact adjustment mechanism, so it can be installed even in narrow spaces.

The apparatus 1 with tilting element adjustable in inclination according to the invention assists the user in the lifting movement of the tilting element by providing an assisted movement.

The apparatus 1 with tilting element adjustable in inclination according to the invention is mechanically simple and at the same time immediately and easily operated.

The apparatus 1 with tilting element adjustable in inclination according to the invention is easy and inexpensive to make.

The apparatus 1 with a tilting element adjustable in inclination according to the invention comprises a tilting element locking system easily manageable by the user by means of the same control device which manages the adjustment of the tilting element inclination.

Therefore, the invention thus devised achieves the preset objects.

Obviously, in practice, it may also take different shapes and configurations from that disclosed above, without departing from the present scope of protection.

Furthermore, all details may be replaced by technically equivalent elements, and any size, shape, and material may be used according to needs.

## Claims

1. Apparatus (1) with tilting element adjustable in inclination comprising:
- a support structure (2);
- a tilting element (3), pivoted to the support structure around a first rotation axis (X1) to move between a first stroke-end position and a second stroke-end position, angularly spaced from each other, said first stroke-end defining the position of use of the tilting element;
- at least a first abutment (4'), fixed on the support structure;
- at least one stop body (10) rotationally connected to the tilting body (3) and to the support structure (2) around the first axis (X1);
- **an automatic constraining mechanism (100)**, suitable for rotationally constraining said stop body (10) to the tilting element (3), said stop body (10), when constrained to the tilting element, stopping the tilting element itself in the first stroke-end position, going to stop against the first abutment (4'),
- a control device (40), which is kinematically connected to said automatic constraining mechanism (100) and is movable between a locking position, in which it does not oppose the action exerted by said automatic constraining mechanism (100) on said stop body (10), and an unlocking position, in which it opposes the action exerted by said automatic constraining mechanism (100),
wherein said constraining mechanism comprises:
- a first toothed portion (101) which is obtained on said stop body (10) and extends on an arc of circumference which is concentric with respect to the first rotation axis (X1) and has a predefined diameter (D2);
- a first toothed wheel (111) which is meshed on said toothed portion (101) of the stop body (10) and is rotationally connected to the tilting element (3) around a second rotation axis (X2) parallel to the first rotation axis (X1), said first toothed wheel (111) having a predefined diameter (D3);
- a first torsion spring (121) which is inserted in said automatic constraining mechanism (100) to provide a force (Fm) suitable for indirectly preventing the rotation of said first toothed wheel (111), generating a sufficient torque to balance a torque (M1) generated by a load (F1) applied on the tilting element (3) and transmitted to the torsion spring (121) by means of the automatic constraining mechanism interposed between it and the stop body (10), the action of said torsion spring (121) being counteracted when said control device (40) moves from said locking position to said unlocking position, **characterised in that** said torsion spring (121) is wound around a rotation pin (131) rotationally connected to the tilting element (3) around a third rotation axis (X3) which is parallel to the first rotation axis (X1) and to the second rotation axis (X2) and is in an intermediate position between said two axes (X1, X2), said torsion spring (121) having a predefined winding diameter (D6), **in that** said automatic constraining mechanism (100) consists of a gear which is suitable for kinematically connecting the rotation of the first toothed wheel (111) to the rotation pin (131) indirectly by means of an intermediate transmission stage.

2. Apparatus (1) according to claim 1, wherein said intermediate transmission stage is a reduction stage.

3. Apparatus (1) according to claim 1 or 2, wherein said automatic constraining mechanism (100) defines a three-stage transmission kinematic system, and wherein preferably at least the intermediate stage is a reduction stage.

4. Apparatus (1) according to claim 1, 2 or 3, wherein the gear of said automatic constraining mechanism (100) comprises:
- a second toothed wheel (141) which is keyed on said rotation pin (131) and has a predefined diameter (D5); and
- a second toothed portion (151) which is obtained on a transmission member (152) rotationally integral with said first toothed wheel (101) and is meshed on said second toothed wheel (141), said second toothed portion (141) extending on an arc of circumference which is concentric to the second rotation axis (X2) and having a predefined diameter (D4),
the presence of said transmission member (152) defining said intermediate transmission stage,
and wherein the diameter (D4) of the second toothed portion (151) is greater than the diameter (D3) of the first toothed wheel (111), thereby defining said intermediate transmission stage as a reduction stage.

5. Apparatus (1) according to claim 4, when dependent on claim 3, wherein the winding diameter (D6) of the torsion spring (121) is greater than the diameter (D5) of the second toothed wheel (141), thereby defining a second reduction stage in the kinematic chain of said automatic constraining mechanism (100).

6. Apparatus (1) according to claim 4, when dependent on claim 3, wherein the winding diameter (D6) of the torsion spring (121) is equal to the diameter (D5) of the second toothed wheel (141), thereby defining a neutral transmission stage in the kinematic chain of said automatic constraining mechanism (100).

7. Apparatus (1) according to any one of the preceding claims, wherein said torsion spring (121) has a first end (121a) constrained to the tilting element (3) and a second end (121b) kinematically associated with the control device (40) so that, when the control device is in the unlocking position, said second end (121b) is subjected to a force which, counteracting the elastic force of the spring, loosens the grip of the spring on the rotation pin (131) and releases the rotation of the rotation pin and of the associated second toothed wheel (141) .

8. Apparatus (1) according to claim 7, wherein the control device (40) comprises:
- a drive element (41), movable between at least two different positions, corresponding to the locking position and the unlocking position, respectively,
- an actuator (42) which engages the second end (121b) of the torsion spring (121) and is movable with respect to said tilting element (3) around a rotation axis (X3, X7) parallel to the first rotation axis (X1) to move between a passive position, in which said actuator (42) does not counteract said torsion spring (121) and an active position, in which said actuator (42) counteracts said torsion spring (121);
- kinematic connection means (44, 45) which connect the drive element (41) to said actuator (42) in such a manner that the unlocking position of the drive element (41) corresponds to the active position of the actuator and the locking position of the drive element (41) corresponds to the passive position of the actuator.

9. Apparatus according to claim 8, wherein said actuator (42) comprises a support body (43) by means of which said actuator (42) is rotationally connected to said tilting element (3) and is mechanically associated with said kinematic connection means of the control device (40).

10. Apparatus according to claim 9, wherein the rotation axis of said actuator (42) coincides with the third rotation axis (X3) around which said rotation pin (131) rotates and wherein said actuator (42) comprises a first bushing (42a) which is supported axially cantilevered by said support body (43) to be fitted coaxially on said torsion spring (121) and is circumferentially interrupted by a radial appendage (42b) by means of which said first bushing (42a) engages the second end (121b) of the spring (121) .

11. Apparatus (1) according to claim 10, when dependent on claim 4, wherein said support body (43) comprises:
- a main body (43a) by means of which said actuator (42) is pivoted on said rotation pin (131) and
- a second bushing (43b) which is coaxial to said first bushing (42a) and acts as a spacer between said main body (43a) and said first bushing (42a),
wherein said second bushing (43b) internally houses the second toothed wheel (141) and is circumferentially open to allow the transmission member (152) to mesh on the second toothed wheel (141), rotating around the second rotation axis (X2) between said main body (43a) and said first bushing (42a).

12. Apparatus (1) according to claim 9, wherein the rotation axis (X7) of said actuator (42) is distinct from the third rotation axis (X3) around which said rotation pin (131) rotates and wherein said actuator (42) comprises:
- a main body (43a) by means of which said actuator (42) is pivoted on said tilting element (3); and
- a tooth (49) extending cantilevered from said main body (43a) in a position radially offset with respect to the rotation axis (X7) of said support body (43) to engage the second end (121b) of the spring (121).

13. Apparatus (1) according to any one of claims 9 to 13, wherein said kinematic connection means comprise a gear between a portion (43d) of said main body (43a) of said support body (43) and a rotating member (44) which can be driven in rotation by the movement of said drive element (41) between said unlocking position and said locking position.

14. Apparatus (1) according to any one of the preceding claims, wherein said tilting element (3) comprises a support frame (30) which in turn comprises two arms (31, 32) which extend in length parallel to an armrest axis (Y) orthogonal to the first rotation axis (X1), each arm (31, 32) being pivoted at a tilting end (31', 32') thereof to said fixed structure (2) to rotate around said first rotation axis (X1) and wherein said two arms (31, 32) are spaced apart from each other to define a technical compartment (33).

15. Apparatus according to claim 14, when dependent on claim 11 or 12, wherein said rotation pin (131) is rotationally supported by said two arms (31, 32) and wherein the two arms (31, 32), the main body (43a) of the support body of the actuator (42), the transmission member (152) and the stop body (10) each consist of a shaped plate and are assembled so that the faces of the respective shaped plates are parallel to each other.

16. Apparatus according to claim 15, wherein the first toothed portion (101) and the second toothed portion (151) are obtained along the peripheral edge of the shaped plates which form the stop body (10) and the transmission member (152), respectively.

17. Apparatus (1) according to any one of the preceding claims, comprising motor means (50) suitable for providing - directly or indirectly - a driving torque to the rotation pin (131) to impart a rotation to the first toothed wheel (111) causing a relative motion between the first toothed wheel (111) and the stop body (10) and thus between the tilting element (3) and the stop body (10) when the control device is in the unlocking position.

18. Apparatus (1) according to claim 17, wherein said motor means consist of a second torsion spring (50) which is wound around the rotation pin (131) and has an end (51) constrained to the tilting element (3).

19. Apparatus (1) according to any one of claims 1 to 16, comprising at least one actuator suitable for applying a force acting directly on said stop body (10) to cause a relative motion between first toothed wheel (111) and stop body (10) and thus between tilting element (3) and stop body (10) when the control device is in the unlocking position.

20. Apparatus according to any one of claims 1 to 16, comprising at least one friction element which is arranged between the stop body (10) and the support structure (2) and is sized so that:
- when the control device (40) is in the locking position, the friction generated between the stop body (10) and the tilting body (3) is greater than the friction generated between the stop body (10) and the support structure (2) so that the moving tilting element drags the stop body therewith, and
- when the control device (40) is in the unlocking position, the friction generated between the stop body (10) and the tilting body (3) is lower than the friction generated between the stop body (10) and the support structure (2) so that the moving tilting element does not drag the stop body therewith.

21. Apparatus according to any one of the preceding claims, comprising at least one counterweight associated with the stop body (10), said counterweight being sized and positioned with respect to the first rotation axis (X1) and the first stop (4') so that, when the control device (40) is in the unlocking position, the stop body (10) assumes a stable position only if it is resting against the first abutment (4').

22. Apparatus (1) according to any one of the preceding claims, comprising an appendage (38) protruding from said tilting element (3) and a locking system (200) suitable for blocking the rotation of the tilting element (3) around the first rotation axis (X1), wherein said locking system (200) comprises:
- a locking harpoon (201) which is rotationally supported by the support structure (2) around a fifth rotation axis (X5) parallel to the first rotation axis (X1) to be movable between a first position, in which said locking harpoon (201) engages said appendage (38), preventing the rotation of the tilting element (3) around the first rotation axis (X1), and a second position, in which said locking harpoon (201) does not engage said appendage (38), leaving the rotation of the tilting element (3) around the first rotation axis (X1) free;
- a pushing device (210), preferably an elastic element, which is configured to automatically maintain said harpoon (201) in the first position,
wherein said apparatus (1) comprises an unlocking harpoon (220) which is rotationally supported around a sixth rotation axis (X6) parallel to the first rotation axis (X1) and is movable by a control device around said sixth rotation axis (X6) with respect to said locking harpoon so as to bring said locking harpoon from said first position to said second position,
wherein the control device of said unlocking harpoon (220) coincides with the control device (40) of said automatic constraining mechanism (100).

23. Apparatus (1) according to claim 22, when dependent on claim 8, wherein said unlocking harpoon (220) is installed on board said tilting element (3), preferably near or at said appendage (38), and comprises:
- a first protrusion (221) with which engages said locking harpoon (201); and
- a second protrusion (222) which is kinematically connected to the actuator (42) of said control device (40) so that said actuator (42), in passing from said passive position to said active position, moves said unlocking harpoon (220), thus pushing the locking harpoon (201) from said first position to said second position.

24. Apparatus according to claim 23 and claim 9, wherein the second protrusion (222) of the unlocking harpoon (220) is slidably engaged on the support body (43) of the actuator (42) of said control device (40) at a guide groove (230) which is obtained on said support body (43) and acts as a cam, and wherein said guide groove (230) extends on a first active section (231), along which the support body (43), in its rotation around the rotation axis (X3, X7) thereof, imposes a rotation on the unlocking harpoon, and a second neutral section (232), along which the support body (43) in its rotation around the rotation axis (X3, X7) thereof, does not impose a rotation on the unlocking harpoon, said first active section (231) having an extension in length such as to cause a rotation of the unlocking harpoon which is sufficient to determine the passage of the locking harpoon from the first to the second position.

25. Apparatus according to any one of the preceding claims, **characterised in that** it is an armrest, in particular for vehicles.
